# FASCICULE DE BREVET EUROPEEN

(11) **EP 3 546 168 B1**
(45) Date de publication et mention de la délivrance du brevet: **27.05.2020**
(21) Numéro de dépôt: 19165110.8
(22) Date de dépôt: 26.03.2019
(51) Int. Cl.: B29C 33/44, E04H 4/00

(54) **DISPOSITIF DE MOULAGE D'UNE COQUE POUR BASSIN DE PISCINE MONOCOQUE**
VORRICHTUNG ZUM FORMEN EINER SCHALE FÜR EIN EINSCHALIGES POOLBECKEN
DEVICE FOR MOULDING A SHELL FOR A MONOSHELL POOL BASIN

(30) Priorité: 26.03.2018 FR 1870344
(43) Date de publication de la demande: 02.10.2019
(73) Titulaire: Composite Industrie du Perigord, 24400 Les Lèches (FR)
(72) Inventeur: TORREGROSSA, Christian, 24400 Les Lèches (FR)
(74) Mandataire: Cabinet Chaillot

(56) Documents cités:
- FR-A1- 2 923 852
- FR-A1- 2 929 308
- FR-A1- 2 960 580
- FR-A1- 3 056 241

## Description

La présente invention se rapporte au domaine des piscines, et, en particulier, des piscines dont le bassin est constitué par une coque.

La présente invention porte en particulier sur un dispositif de moulage pour permettre la fabrication d'une coque pour bassin de piscine monocoque équipée d'un compartiment destiné à recevoir un accessoire, notamment un volet roulant immergé, ainsi que sur un procédé de fabrication de coque à l'aide de ce dispositif de moulage, et sur une coque ainsi obtenue.

Les piscines dont le bassin est constitué par une coque sont de plus en plus souvent équipées d'un volet roulant, également appelé couverture, pour recouvrir la surface de la piscine. Un tel volet roulant permet, d'une part, de limiter le refroidissement nocturne en bloquant l'évaporation de surface et, d'autre part, d'empêcher les saletés naturelles telles que des feuilles, des branches ou d'autres corps étrangers de polluer la piscine, ainsi que de protéger les animaux et les personnes d'une chute accidentelle dans le bassin, le volet étant généralement prévu pour résister à la chute d'une personne.

Il existe de nombreux types de volets. Des volets, dits hors d'eau, sont logés dans des caissons situés au-dessus de la surface de l'eau, en général à une extrémité de la piscine sur la margelle. Les volets de ce type sont encombrants et peu esthétiques. On connaît également des volets dont le caisson est enterré, à l'extérieur de la piscine. Ces volets sont effectivement moins encombrants et plus esthétiques que ceux du type précédemment cité, aucune partie ne dépassant du sol. Il n'en demeure pas moins qu'ils nécessitent la mise en œuvre d'un emplacement spécifique, hors de l'eau, dans le sol, au voisinage de la piscine. Un autre type regroupe les volets dits immergés. Dans ce cas, le volet est situé dans la piscine, à une extrémité de celle-ci et affleurant à la surface de l'eau. Ces volets sont plus discrets car ils ne dépassent pas de la surface de la piscine. De plus, leur emprise dans la piscine est faible ce qui permet de préserver la longueur utile du bassin.

D'une manière connue, une coque pour bassin de piscine est réalisée dans un bloc, au moyen d'un moule qui correspond exactement à l'intérieur du bassin de la piscine. Dans le cas d'une coque stratifiée, on applique plusieurs couches de résine polyester plus fibre de verre avec, généralement, des raidisseurs verticaux et/ou horizontaux. Après démoulage, on procède généralement à l'application d'une couche de finition. Des réserves sont généralement établies afin de permettre le montage et la mise en place d'accessoires tels que les skimmers par exemple. La coque obtenue peut avoir différentes formes géométriques et intégrer, lors de sa fabrication, des marches d'escaliers par exemple.

Compte-tenu de la réalisation du bassin de piscine sous la forme d'une coque, la fabrication d'une telle coque de piscine intégrant un compartiment destiné à recevoir un volet roulant immergé, se heurte à de nombreuses difficultés.

Une solution connue pour la mise en place d'un volet roulant est décrite dans le brevet français FR2929308.

Ce brevet divulgue une piscine dont le bassin est constitué par une coque et dont l'un des côtés au moins de la coque est constitué par un module rapporté, lequel module rapporté peut être conformé en section pour faire office de coffre pour l'intégration d'un volet roulant.

Pour la fixation du module rapporté à la coque, deux techniques sont connues.

Une première technique consiste à fabriquer le module rapporté indépendamment de la coque de piscine traditionnelle, puis, lors de l'installation, à pratiquer dans la paroi de la coque de piscine principale, une découpe de forme complémentaire de la bordure d'assemblage du module à rapporter sur la coque principale. Une fois cette découpe réalisée, on ponce les bords de celle-ci puis on réalise l'assemblage par boulonnage du module rapporté sur les bords de la découpe réalisée dans la coque principale de la piscine. Après assemblage, on réalise l'étanchéité de la liaison formée entre la coque et le module rapporté par une stratification sur la jonction pour éviter les infiltrations d'eau après la mise en eau de la piscine.

Cette technique d'assemblage de module préfabriqué présente plusieurs inconvénients. En premier lieu, les découpes de la coque principale ont pour conséquences un gaspillage de matière, un allongement et une complexification de l'installation de la piscine sur site. En effet, les portions de coque découpées ne sont pas recyclables et les opérations de découpe doivent être réalisées avec le plus grand soin afin que l'assemblage ultérieur puisse être effectué proprement et fidèlement. De plus, la coque et le module rapporté étant soumis à des contraintes mécaniques, hydrauliques, et/ou thermiques différentes, ceux-ci peuvent se déplacer mutuellement et la jonction étanche entre la coque et le module rapporté n'est alors plus assurée. En outre, la pratique de découpes nécessite une stratification additionnelle après assemblage du module rapporté sur la coque, au niveau de la liaison entre la coque et le module rapporté. Or, cette stratification ne peut se faire correctement que dans le respect de certaines conditions climatiques de température et d'hygrométrie, ce qui parfois oblige les ouvriers en charge de l'installation de la piscine à patienter plusieurs jours avant de pouvoir reprendre l'installation de la piscine après stratification.

Une autre technique consiste à former, lors du moulage de la coque principale de la piscine, une réservation de forme complémentaire de celle de la bordure du module à rapporter dans la paroi latérale de ladite coque principale. Cette réservation permet d'éviter les inconvénients inhérents à la réalisation d'une découpe sur le lieu d'installation de la piscine, notamment ceux relatifs à la fragilisation de la structure de la coque principale.

Cependant, cette technique de fabrication exige autant de moules de fabrication de coque principale que de positionnements souhaités de la réservation en fonction des souhaits d'installation du module rapporté par les clients, ce qui représente pour le fabricant de coque un coût exorbitant et des délais de fabrication importants.

D'autre part, pour que l'assemblage, qui se fait toujours par boulonnage, soit bien étanche entre le module rapporté et la coque principale de la piscine, il est souvent nécessaire de prévoir des inserts d'assemblage, qui sont préformés selon le périmètre de la réservation et dans lesquels sont noyés des boulons dont seule la tige filetée dépasse. Or, l'emploi de ces inserts d'assemblage est contraignant, puisqu'il faut avant l'installation de la piscine, réaliser un insert spécialement adapté, puis mettre en place celui-ci de façon précise entre la coque de la piscine et les bords d'assemblage du module rapporté, puis enfin réaliser le boulonnage pour lier l'ensemble. Ces opérations complexifient et allongent considérablement les durées de montage de piscines avec modules rapportés.

Il existe donc un besoin pour un dispositif de moulage et un procédé de fabrication associé permettant de fabriquer une coque pour bassin de piscine monocoque équipée pour recevoir des accessoires dans un logement ménagé à cet effet dans une paroi de la coque, tels qu'un volet roulant immergé, tout en assurant une bonne étanchéité et une bonne rigidité de la coque, sans employer d'éléments de liaison ou d'assemblage annexes, peu contraignant et peu coûteux.

La présente invention vise à résoudre les inconvénients de l'état antérieur de la technique, en proposant un dispositif de moulage comprenant un moule de coque de piscine classique auquel est fixé de manière amovible un moule de partie en contre-dépouille, lequel dispositif de moulage permet de fabriquer de manière simple, rapide et peu coûteuse une coque pour bassin de piscine monocoque intégrant une partie en contre-dépouille formée d'un seul tenant avec le reste de la coque, notamment depuis le début du gelcoat jusqu'à la fin de la stratification, autrement dit la partie en contre-dépouille et le reste de la coque sont d'une seule pièce, ou encore autrement dit la coque est monobloc.

La présente invention a donc pour objet un dispositif de moulage d'une coque pour bassin de piscine, laquelle coque comporte des parois latérales et un fond et intègre un compartiment de logement d'accessoire, notamment de volet roulant, dans l'une de ses parois latérales, le dispositif de moulage comprenant un moule de base creux comportant une surface supérieure et des parois latérales, la surface supérieure étant destinée à définir le fond de la coque à mouler, le dispositif de moulage étant caractérisé par le fait qu'il comprend en outre au moins un moule de contre-dépouille latéral présentant une face d'interface apte à être placée contre l'une des parois latérales du moule de base, à une distance prédéterminée de la surface supérieure et de l'extrémité de ladite paroi latérale du moule de base, et une face moulante ayant un profil conforme à l'intérieur du compartiment de logement d'accessoire à mouler, l'au moins un moule de contre-dépouille étant apte à être solidarisé temporairement au moule de base, par des moyens de liaison amovible, avec la face d'interface placée contre ladite paroi latérale du moule de base.

Un tel dispositif de moulage permet de résoudre les problèmes de démoulage des formes en contre-dépouille, des cavités ou des excroissances, et permet en particulier de mouler une coque pour bassin de piscine monocoque comportant de telles formes indémoulables avec un moule classique.

De plus, le caractère amovible de l'au moins un moule de contre-dépouille permet d'utiliser soit le moule de base seul pour la réalisation d'une coque classique, soit le moule de base portant au moins un moule de contre-dépouille de forme et dimensions souhaitées pour la réalisation d'une coque de piscine intégrant un compartiment de logement d'accessoire.

On souligne ici que, bien que la première application de la présente invention est la réalisation d'un compartiment de logement de volet roulant, elle n'y est pas limitée et peut être employée pour le logement de tout autre accessoire.

On souligne également que la présente invention n'est pas limitée à une configuration particulière de la face d'interface, pourvue qu'elle soit apte à être placée de manière stable contre une paroi latérale du moule creux, de préférence en formant avec cette dernière une liaison de type appui plan. Ainsi, la face d'interface peut, par exemple, être formée par une ou plusieurs surfaces, notamment avec la ou chaque surface formée par une face d'un élément de type plaque. La face d'interface pourrait également être formée par une ou plusieurs arêtes, destinées chacune à venir en contact avec la paroi latérale du moule de base suivant une ligne de contact et formées par exemple par une tranche d'un élément de type plaque qui s'étendra perpendiculairement à ladite paroi latérale.

On souligne enfin que la présente invention n'est pas limitée à une technique de moulage spécifique, et le moulage de la coque pourra, par exemple, être une stratification au contact, une stratification par projection simultanée, un moulage sous vide, etc.

De préférence, la face moulante de l'au moins un moule de contre-dépouille présente une forme convexe ayant un rayon de courbure. On choisira ce rayon de courbure pour qu'il corresponde au rayon de courbure souhaité pour le compartiment de logement d'accessoire à mouler.

Dans un premier mode de réalisation, la face d'interface et la face moulante de l'au moins un moule de contre-dépouille sont portées par un même élément rigide ou par plusieurs éléments rigides fixés d'un seul tenant les uns aux autres.

Ainsi, l'au moins un moule de contre-dépouille peut se présenter sous la forme d'une pièce de structure simple et peu coûteuse, qui sera, de préférence, creuse, de façon à être légère et donc aisément manipulable par un ou plusieurs opérateurs.

Dans un deuxième mode de réalisation, l'au moins un moule de contre-dépouille est un moule gonflable comprenant une partie rigide présentant la face d'interface et une partie souple gonflable présentant la face moulante, la partie souple gonflable étant solidaire de la partie rigide et apte à être reliée à un moyen de gonflage par une ouverture de gonflage et de dégonflage.

Ainsi, l'au moins un moule de contre-dépouille peut également se présenter sous la forme d'une pièce de structure simple et peu coûteuse qui, du fait de son caractère gonflable/dégonflable, est facile à stocker à l'état dégonflé. Elle sera également légère, et donc aisément manipulable par un ou plusieurs opérateurs.

Le dispositif de moulage pourra comprendre un unique moule de contre-dépouille.

Avantageusement, le dispositif de moulage comprend plusieurs moules de contre-dépouille, lesquels forment alors des segments de moule aptes à être accolés les uns aux autres contre le moule de base pour former un profil qui correspond à l'intérieur du compartiment de logement d'accessoire à mouler, dont au moins un segment central et deux segments latéraux, les segments de moule s'étendant notamment sur une longueur supérieure à la longueur de la paroi latérale du moule de base à laquelle ils sont solidarisés.

Cette disposition de plusieurs moules de contre-dépouille sous forme de segments permet le démoulage de la coque moulée vis-à-vis du dispositif de moulage quelle que soit la longueur du compartiment de logement d'accessoire souhaité. Ainsi, il est possible d'obtenir dans la coque un compartiment de logement d'accessoire qui dépasse au moins légèrement de chaque côté de la coque, et donc d'y placer, par exemple, un volet roulant susceptible de s'étendre sur toute la largeur de la piscine.

Dans le deuxième mode de réalisation particulier mentionné ci-dessus, la face d'interface peut avoir une longueur égale à la longueur de la paroi latérale du moule de base à laquelle elle est solidarisée, la partie souple étant préformée pour que la face moulante présente un profil de longueur supérieure à la longueur de la face d'interface après gonflage.

Les moyens de liaison amovible entre le moule de base et l'au moins un moule de contre-dépouille peuvent être des moyens mécaniques, notamment des vis.

La présente invention a également pour objet un procédé de fabrication d'une coque pour bassin de piscine, caractérisé par le fait que le moulage de ladite coque est réalisé à l'aide d'un dispositif de moulage tel que défini ci-dessus, et comprenant les étapes suivantes :
- solidariser l'au moins un moule de contre-dépouille à l'une des parois latérales du moule de base fixe, en une position prédéterminée ;
- mouler la coque, notamment par stratification, sur le moule de base et l'au moins un moule de contre-dépouille ;
- après moulage de la coque, désolidariser l'au moins un moule de contre-dépouille du moule de base et démouler du moule de base la coque et l'au moins un moule de contre-dépouille ; et
- retirer de la coque moulée l'au moins un moule de contre-dépouille.

Ainsi, l'au moins un moule de contre-dépouille fait partie du dispositif de moulage pendant le moulage de la coque, mais fait partie de la coque pendant le démoulage de celle-ci. En effet, l'au moins un moule de contre-dépouille remplit la contre-dépouille formée par le compartiment de logement et fournit une surface en dépouille permettant le démoulage de la coque moulée. Après retrait de l'au moins un moule de contre-dépouille de la coque moulée, celui-ci peut être solidarisé à nouveau au moule de base pour le moulage d'une autre coque.

Dans le cas où le moulage de la coque est réalisé à l'aide d'un dispositif de moulage selon le deuxième mode de réalisation mentionné ci-dessus, à savoir avec au moins un moule de contre-dépouille gonflable, le procédé comprend en outre les étapes de gonflage de la partie souple du moule gonflable avant l'étape de moulage, et de dégonflage de la partie souple avant l'étape de démoulage de la coque.

A l'état dégonflé, la partie souple retrouve toute sa souplesse, ce qui permet de faciliter le démoulage.

Dans le cas où le moulage de la coque est réalisé à l'aide d'un dispositif de moulage selon le premier mode de réalisation, avec plusieurs moules de contre-dépouille sous forme de segments, l'étape de retrait de l'au moins un moule de contre-dépouille de la coque moulée peut comprendre le retrait du segment central, le déplacement de chaque segment latéral vers le centre du compartiment formé dans la coque, puis son retrait.

La présente invention a également pour objet une coque, notamment stratifiée, pour bassin de piscine monocoque, laquelle coque comprend un fond et des parois latérales, caractérisée par le fait que la coque comprend en outre un compartiment de logement d'accessoire, notamment de volet roulant, formé en contre-dépouille et d'un seul tenant avec l'une des parois latérales de la coque lors du moulage de ladite coque, de préférence selon un procédé de fabrication tel que défini ci-dessus, à l'aide d'un dispositif de moulage tel que défini ci-dessus.

Pour mieux illustrer l'objet de la présente invention, on va en décrire ci-après, à titre illustratif et non limitatif, deux modes de réalisation préférés, avec référence au dessin annexé.

Sur ce dessin :
- la Figure 1 est une vue en perspective du dispositif de moulage selon un premier mode de réalisation de la présente invention, comprenant plusieurs moules de contre-dépouille ;
- la Figure 2 est une vue en perspective d'un moule de contre-dépouille de la Figure 1 ;
- la Figure 3 est une vue en coupe verticale d'une coque de piscine obtenue à l'aide du dispositif de moulage selon la présente invention ;
- la Figure 4 est une vue en perspective d'une coque de piscine obtenue à l'aide du dispositif de moulage selon la présente invention, la coque n'ayant pas encore été retournée vers le haut à la suite de son moulage ;
- la Figure 5 représente l'étape de démoulage d'une coque de piscine obtenue à l'aide du dispositif de moulage selon le premier mode de réalisation de la présente invention ;
- la Figure 6 représente une vue en coupe verticale d'une partie du dispositif de moulage selon un deuxième mode de réalisation de la présente invention ;
- la Figure 7 représente une vue en coupe verticale de l'étape de réalisation d'une coque de piscine à l'aide du dispositif de moulage de la Figure 6 ; et
- la Figure 8 représente une vue en coupe verticale de l'étape de dégonflage du dispositif de moulage de la Figure 6, avant l'étape de démoulage.

Le dispositif de moulage 1 selon la présente invention permet la fabrication en une seule pièce d'une coque 2 stratifiée pour bassin de piscine intégrant une partie en contre-dépouille 3, en particulier un compartiment destiné à recevoir un accessoire, par exemple un moyen de protection tel qu'un volet roulant.

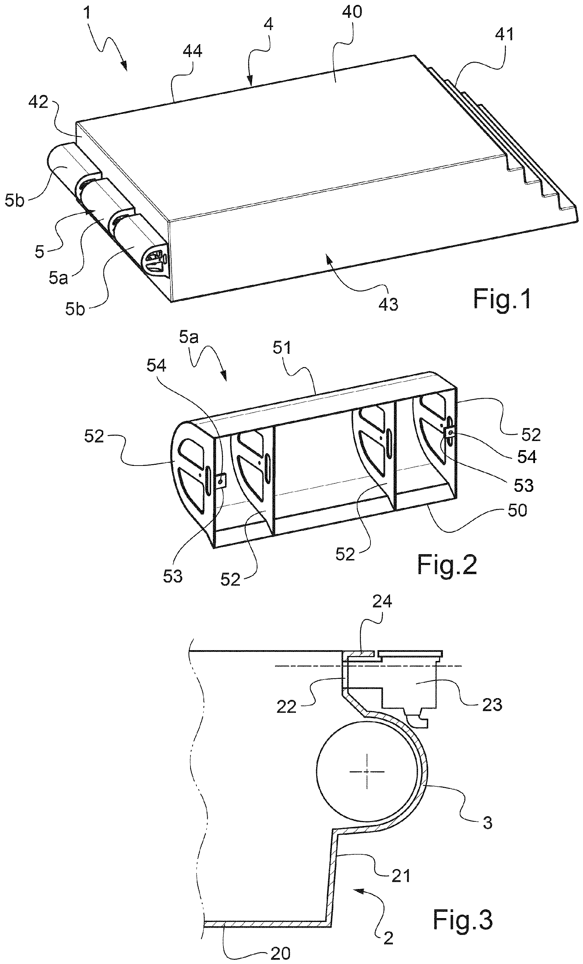

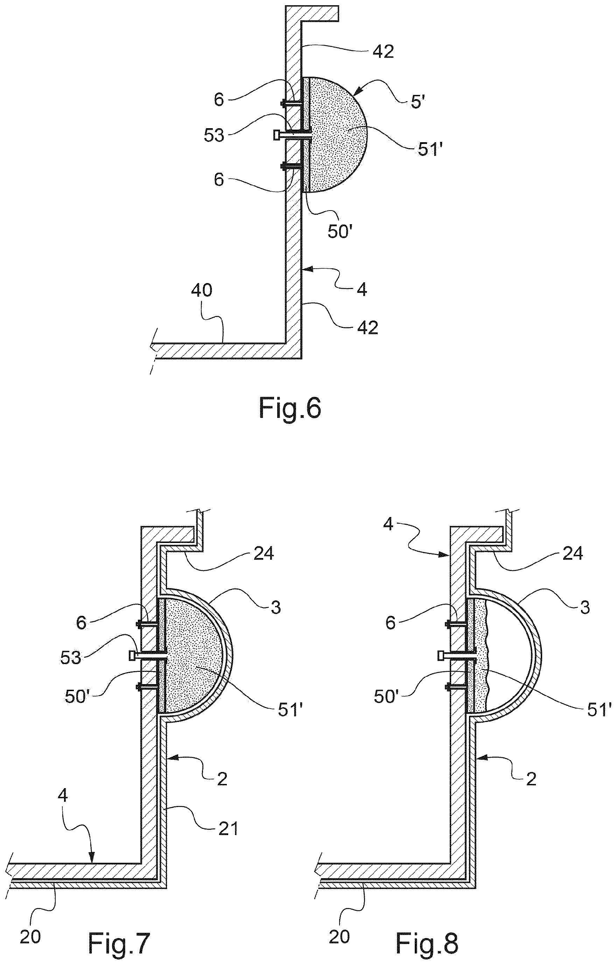

Si l'on se réfère aux Figures 1 et 6, qui représentent respectivement un dispositif de moulage 1 selon des premier et deuxième modes de réalisation de la présente invention, on peut voir que le dispositif de moulage 1 comprend un moule de base 4 et au moins un moule de contre-dépouille 5, 5'.

Le dispositif de moulage 1 selon le premier mode de réalisation, représenté sur les Figures 1, 2 et 5, comprend un moule de base 4 auquel plusieurs moules de contre-dépouille rigide 5 sont fixés de manière amovible.

Le dispositif de moulage 1 selon le deuxième mode de réalisation, représenté sur les Figures 6 à 8, comprend un moule de base 4 auquel est fixé un seul moule de contre-dépouille gonflable 5'.

Le moule de base 4 selon les premier et deuxième modes de réalisation de l'invention se présente sous la forme d'un corps creux comportant une paroi supérieure horizontale 40 et des parois latérales verticales 41, 42, 43, 44.

La paroi supérieure 40 présente une face de moulage tournée vers le haut et une face intérieure opposée. La face de moulage de la paroi supérieure 40 sert à définir le fond 20 de la coque 2 à mouler. Ainsi, la paroi supérieure 40 présente une forme et des dimensions qui correspondent à la forme et aux dimensions souhaitées pour le fond 20 de la coque 2. Sur la Figure 1, la paroi supérieure 40 présente une forme rectangulaire. Cependant, il convient de noter que toute forme polygonale ou arrondie souhaitée peut être envisagée.

Dans le cas d'une paroi supérieure 40 rectangulaire, le moule de base 4 comporte quatre parois latérales verticales 41, 42, 43, 44, dont deux parois transversales 41, 42 et deux parois longitudinales 43, 44. Les parois transversales 41, 42 sont situées en regard l'une de l'autre à chaque extrémité de la paroi supérieure 40 dans le sens de la longueur. Les parois longitudinales 43, 44 sont situées en regard l'une de l'autre à chaque extrémité de la paroi supérieure 40 dans le sens de la largeur. L'une des parois transversales 41 présente un profil de marches d'escalier. L'autre paroi transversale 42, de forme rectangulaire, est destinée à coopérer avec l'au moins un moule de contre-dépouille 5, 5'. Les parois latérales longitudinales 43, 44, la paroi transversale 41 présentant le profil de marches d'escalier et la paroi transversale 42 destinée à coopérer avec l'au moins un moule de contre-dépouille 5, 5' ont des formes et dimensions qui correspondent à celles des parois latérales 51 de la coque 2 à réaliser.

Utilisé seul, le moule de base 4 permet de fabriquer une coque 2 pour bassin de piscine classique, présentant des parois 21 et un fond 20 réguliers et pleins.

Pour permettre la fabrication d'une coque 2 intégrant un compartiment 3 destiné au logement d'un accessoire comme un volet roulant, le dispositif de moulage 1 comporte au moins un moule de contre-dépouille 5, 5' amovible.

Le ou chaque moule de contre-dépouille 5 selon le premier mode de réalisation de l'invention est un moule rigide, ici creux, présentant une face d'interface 50 et une face moulante 51.

La face d'interface 50 est destinée à être plaquée contre la face extérieure de la paroi latérale verticale transversale 42 du moule de base 4 opposée à la paroi 41 formant contre-empreinte des marches d'escalier, et fixée de manière amovible à celle-ci. La face d'interface 50 est ici portée par un cadre rectangulaire rigide apte à venir en contact contre la paroi latérale 42 le long de quatre lignes de contact, pour une liaison de type appui plan. La face d'interface 50 est donc formée par les quatre bords du cadre rectangulaire rigide, que l'on peut bien voir sur la Figure 2.

La face moulante 51 est destinée à faire saillie vers l'extérieur du moule de base 4, à partir de la paroi latérale 42 du moule de base 4. La face moulante 51 est ici formée par une pièce sous la forme d'un demi-cylindre solidaire dudit cadre rectangulaire, et donc de la face d'interface 50. Il convient de noter que d'autres formes peuvent être envisagées pour la face moulante 51, en particulier toute forme convexe, cette face moulante 51 étant conforme à la face intérieure du compartiment 3 souhaité.

Des parties de rigidification 52 s'étendent perpendiculairement à la face d'interface 50, à l'intérieur de la face moulante 51. En particulier, chaque moule de contre-dépouille 5 peut comprendre une partie de rigidification 52 à chaque extrémité du moule de contre-dépouille 5 et au moins deux parties de rigidification intermédiaires 52 espacées les unes des autres et parallèles entre elles. Chaque partie de rigidification 52 se présente ainsi sous la forme d'une plaque ajourée dont le bord suit une forme de demi-cylindre. Le bord libre de chaque plaque de rigidification 52 peut éventuellement s'étendre dans le même plan que la face d'interface 50, pour alors en faire partie.

On souligne ici que l'on pourrait tout à fait prévoir un moule de contre-dépouille rigide qui soit formé par une pièce pleine, et non creuse comme décrite ci-dessus, cette dernière présentant toutefois l'avantage d'être légère et donc d'être manipulable plus facilement et de ne pas solliciter trop fortement le moule de base lorsqu'elle est solidarisée à celui-ci.

Les moules de contre-dépouille 5 sont fixés au moule de base 4 à une hauteur souhaitée permettant au volet roulant qui sera reçu dans le compartiment 3 ainsi formé d'affleurer à la ligne d'eau une fois la coque 2 obtenue remplie.

La longueur du moule de contre-dépouille 5 selon le premier mode de réalisation sera généralement au moins égale à la longueur de la paroi latérale 42 à laquelle il est fixé de manière amovible.

Dans le cas où la longueur du compartiment 3 à former est égale ou inférieure à la longueur de la paroi latérale transversale 42 du moule de base 4, on pourra prévoir un seul moule de contre-dépouille 5.

Dans le cas où la longueur du compartiment 3 à former est supérieure à la longueur de la paroi latérale transversale 42 du moule de base 4, on pourra prévoir plusieurs moules de contre-dépouille 5, formant chacun un segment de moule 5a, 5b, par exemple on pourra prévoir trois segments de moule comme représenté sur la Figure 1. Dans ce cas, le dispositif de moulage 1 comprend un segment central 5a et au moins deux segments latéraux 5b, de part et d'autre du segment central 5a. Les trois segments 5a, 5b sont agencés sur la longueur de la paroi latérale 42 du moule de base 4, l'un à la suite de l'autre, à une même hauteur sur le moule de base 4.

On souligne ici que les trois segments 5a, 5b sont normalement accolés l'un à la suite de l'autre, de façon à former une face moulante sensiblement continue, et que l'on a illustré sur la Figure 1 les moules de contre-dépouille 5 avec un intervalle entre eux de façon à mieux les identifier sur la figure. En pratique, cet intervalle n'est pas présent.

Le moule de contre-dépouille 5, que l'on en prévoit un ou que l'on en prévoit plusieurs, est fixé au moule de base 4 par l'intermédiaire de tout moyen de liaison amovible 6 approprié.

Par exemple, les deux plaques de rigidification 52 aux deux extrémités du moule de contre-dépouille 5 portent chacune une patte de fixation 53 qui s'étend vers l'intérieur, perpendiculairement à ladite plaque de rigidification 52, et qui comporte un trou traversant 54. La paroi latérale 42 du moule de base 4 présente également deux traversants (non visibles) qui seront chacun alignés avec un trou traversant 54 respectif lorsque les moules de contre-dépouille 5 sont fixés au moule de base 4, pour le passage de vis à travers ladite paroi latérale 42 et les pattes de fixation 54, ce par quoi les moules de contre-dépouille 5 sont solidarisés temporairement au moule de base 4.

Le moule de base 4 et l'au moins un moule de contre-dépouille 5 peuvent être réalisés en tout matériau approprié pour le moulage de la coque. Par exemple, ils seront réalisés en métal, notamment en aluminium. Ils pourront être faits d'un même matériau ou de matériaux différents.

Le moule de contre-dépouille 5' selon le deuxième mode de réalisation de l'invention est un moule gonflable comprenant une partie rigide formant la face d'interface 50' et une partie souple formant la face moulante 51'.

La partie rigide est destinée à être fixée de manière amovible à la face extérieure de la paroi latérale verticale transversale 42 du moule de base 4 opposée à la paroi 41 formant contre-empreinte des marches d'escalier. La partie rigide se présente ici sous la forme d'un cadre rigide pourvu de trous pour les moyens de liaison amovible 6. De tels moyens de liaison amovible 6 sont, par exemple, des vis. La hauteur de la partie rigide, et donc de la face d'interface 50', correspond au diamètre souhaité du compartiment 3. La longueur de la partie rigide, et donc de la face d'interface 50', peut être sensiblement égale à la largeur souhaitée de la coque 2, ou inférieure à celle-ci.

La partie souple, et donc la face moulante 51', est destinée à faire saillie vers l'extérieur du moule de base 4, à partir de la paroi latérale 42 du moule de base 4, après gonflage. La partie souple se présente sous la forme d'une enveloppe réalisée en un matériau souple. Cette enveloppe est rendue solidaire de la partie rigide par tout moyen approprié, notamment par l'intermédiaire d'un moyen de liaison de type velcro (non représenté) prévu, d'une part sur le contour de l'enveloppe, et d'autre part, sur la tranche de la partie rigide. L'enveloppe souple est préformée de telle sorte, qu'à l'état gonflé, la face extérieure de l'enveloppe, qui constitue ladite face moulante, est conforme à l'intérieur du compartiment 3 souhaité.

La partie souple est reliée à un moyen de gonflage (non représenté) par l'intermédiaire d'une ouverture de gonflage et dégonflage 53, telle qu'une valve. Cette valve 53 traverse un trou correspondant prévu dans la partie rigide et dans le moule de base 4. Ainsi, le moyen de gonflage du moule gonflable 5' peut être disposé à l'intérieur du moule de base 4.

Le moule de base 4 et le moule de contre-dépouille 5' peuvent être réalisés en tout matériau approprié pour le moulage de la coque. Par exemple, le moule de base 4 et la partie rigide du moule de contre-dépouille 5' seront réalisés en métal, notamment en aluminium. Ils pourront être faits d'un même matériau ou de matériaux différents. La partie souple du moule de contre-dépouille 5' pourra, par exemple, être réalisée en polyester.

Les dispositifs de moulage 1 selon les premier et deuxième modes de réalisation de l'invention permettent de fabriquer une coque 2 pour bassin de piscine dite monocoque équipée pour recevoir des moyens de protection.

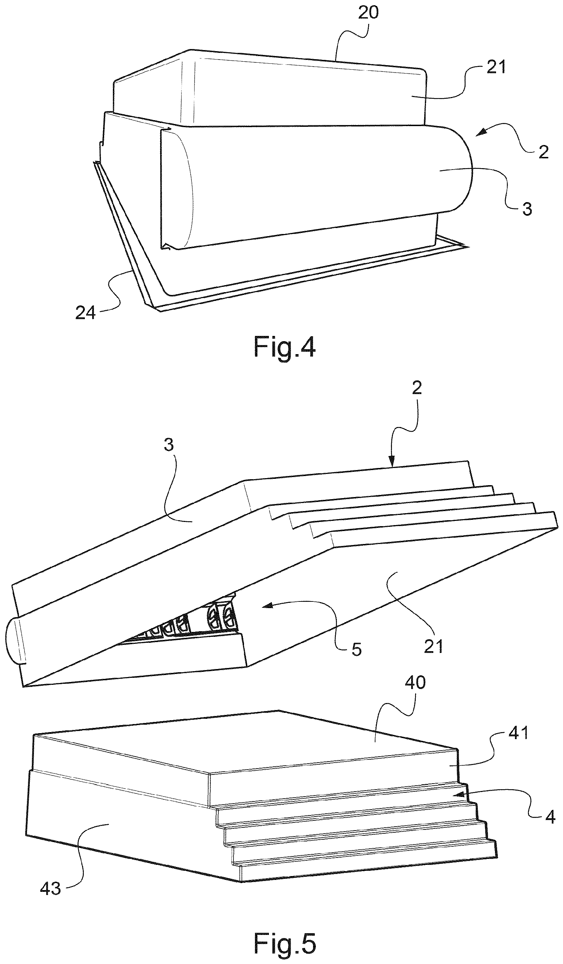

Si l'on se réfère aux Figures 3 et 4, on peut voir que la coque 2 ainsi obtenue comprend un fond 20, des parois latérales 21 et un compartiment 3 de logement d'accessoire, tous d'un seul tenant. En particulier, la coque 2 obtenue à l'aide du dispositif de moulage 1 de la Figure 1 comprend un fond rectangulaire 20, quatre parois latérales 21 dont une paroi latérale présentant des marches d'escalier et une paroi latérale présentant une cavité en contre-dépouille 3 constituant le compartiment de logement. Une réservation 22 peut être pratiquée dans la paroi latérale 21 de la coque 2, au-dessus du compartiment 3, par exemple pour l'installation d'un skimmer 23. Les extrémités libres des parois latérales 21 de la coque 2 peuvent également former un rebord 24, replié vers l'extérieur de la coque 2.

Pour obtenir une telle coque 2 en utilisant le dispositif de moulage 1 selon le premier mode de réalisation de l'invention, les étapes suivantes sont mises en œuvre. Tout d'abord, le dispositif de moulage 1 est préparé par la solidarisation, au moule de base 4, d'au moins un moule de contre-dépouille 5 ayant la forme et les dimensions souhaitées. En particulier, l'au moins un moule de contre-dépouille 5 est solidarisé de manière amovible à la paroi latérale 42 appropriée du moule de base 4 à une distance prédéfinie de la surface supérieure 40 du moule de base 4, laquelle distance est généralement adaptée afin, par exemple, que le volet roulant soit globalement affleurant à la ligne d'eau lorsqu'il est en place dans la coque 2 moulée. Ensuite, le moule de base 4 portant l'au moins un moule de contre-dépouille 5 est placé avec ses parois latérales 41, 42, 43, 44 en contact avec le sol et la face de moulage de sa paroi supérieure 40 tournée vers le haut.

Ensuite, on procède au moulage de la coque. Par exemple, dans le cas d'un moulage par stratification au contact, plusieurs couches de résine et de fibre, notamment de résine polyester plus fibre de verre, sont appliquées sur le moule de base 4 et la face moulante 51 afin de réaliser la coque 2. Après stratification et séchage de la coque 2 moulée, l'au moins un moule de contre-dépouille 5 est désolidarisé du moule de base 4. Pour cela, les moyens de liaison amovible (vis à travers les trous traversants) sont retirés, en particulier depuis l'intérieur du moule de base 4. Une fois que l'au moins un moule de contre-dépouille 5 est libre de se déplacer par rapport au moule de base 4, la coque 2 moulée est démoulée du moule de base 4, par déplacement de la coque 2 vers le haut. l'au moins un moule de contre-dépouille 5 fait alors partie de la coque 2 moulée, celui-ci remplissant le logement 3 formé dans la paroi latérale 21 de la coque 2. Finalement, l'au moins un moule de contre-dépouille 5 est retiré du logement 3 par l'ouverture de ce dernier.

Dans le cas où l'on a prévu trois segments 5a, 5b de moule de contre-dépouille 5, le retrait de l'au moins un moule de contre-dépouille 5 du logement 3 comprend le retrait du segment central 5a, le déplacement de l'un des segments latéraux 5b vers le centre du logement 3 et son retrait, puis le déplacement de l'autre segment latéral 5b vers le centre du logement 3 et son retrait.

Pour obtenir une telle coque 2 en utilisant le dispositif de moulage 1 selon le deuxième mode de réalisation de l'invention, les étapes suivantes sont mises en œuvre. Tout d'abord, le dispositif de moulage 1 est préparé par la solidarisation, au moule de base 4, d'un moule de contre-dépouille 5' ayant la forme et les dimensions souhaitées. En particulier, le moule de contre-dépouille 5' est fixé de manière amovible à la paroi latérale 42 appropriée du moule de base 4 à une distance prédéfinie de la surface supérieure 40 du moule de base 4, laquelle distance est généralement adaptée afin, par exemple, que le volet roulant soit globalement affleurant à la ligne d'eau lorsqu'il est en place dans la coque 2 moulée. Ensuite, le moule de base 4 portant le moule de contre-dépouille 5' est placé avec ses parois latérales 41, 42, 43, 44 en contact avec le sol et la face de moulage de sa paroi supérieure 40 tournée vers le haut. Une fois le moule de contre-dépouille 5' solidarisé au moule de base 4, la partie souple est mise sous pression, par gonflage par l'intermédiaire du moyen de gonflage, par exemple, depuis l'intérieur du moule de base 4. A l'état gonflé, la face moulante 51' définit une contre-empreinte du compartiment 3.

Ensuite, toujours avec comme exemple un moulage par stratification au contact, plusieurs couches de résine et de fibre, notamment de résine polyester plus fibre de verre, sont appliquées sur le moule de base 4 et la face moulante 5' à l'état gonflé afin de réaliser la coque 2. Après stratification et séchage de la coque 2 moulée, la partie souple est dégonflée, par ouverture de la valve 53 de gonflage et dégonflage. A l'état dégonflé, la partie souple retrouve sa souplesse et la valve de gonflage 53 peut être retirée. La partie rigide du moule de contre-dépouille 5' est alors désolidarisée du moule de base 4. Pour cela, les moyens de liaison amovible 6 sont retirés, par exemple depuis l'intérieur du moule de base 4. Une fois que le moule de contre-dépouille 5' est libre de se déplacer par rapport au moule de base 4, la coque 2 moulée est démoulée du moule de base 4, par déplacement de la coque 2 vers le haut. Le moule de contre-dépouille 5' fait alors partie de la coque 2 moulée, celui-ci remplissant le logement 3 formé dans la paroi latérale 21 de la coque 2. Finalement, le moule de contre-dépouille 5' est retiré du logement 3 par l'ouverture de ce dernier.

Il est bien entendu que les modes de réalisation particuliers qui viennent d'être décrits ont été donnés à titre indicatif et non limitatif, et que des modifications peuvent être apportées sans que l'on s'écarte pour autant de la présente invention.

## Revendications

1. Dispositif de moulage (1) d'une coque (2) pour bassin de piscine, laquelle coque (2) comporte des parois latérales (21) et un fond (20) et intègre un compartiment (3) de logement d'accessoire, notamment de volet roulant, dans l'une de ses parois latérales (21), le dispositif de moulage (1) comprenant un moule de base (4) creux comportant une surface supérieure (40) et des parois latérales (41, 42, 43, 44), la surface supérieure (40) étant destinée à définir le fond (20) de la coque (2) à mouler, le dispositif de moulage (1) étant **caractérisé par le fait qu'**il comprend en outre au moins un moule de contre-dépouille (5 ; 5') latéral présentant une face d'interface (50 ; 50') apte à être placée contre l'une des parois latérales (42) du moule de base (4), à une distance prédéterminée de la surface supérieure (40) et de l'extrémité de ladite paroi latérale (42) du moule de base (4), et une face moulante (51 ; 51') ayant un profil conforme à l'intérieur du compartiment (3) de logement d'accessoire à mouler, l'au moins un moule de contre-dépouille (5 ; 5') étant apte à être solidarisé temporairement au moule de base (4), par des moyens de liaison amovible (53 ; 6), avec la face d'interface (50 ; 50') placée contre ladite paroi latérale (42) du moule de base (40).

2. Dispositif de moulage (1) selon la revendication 1, **caractérisé par le fait que** la face moulante (51 ; 51') de l'au moins un moule de contre-dépouille (5 ; 5') présente une forme convexe ayant un rayon de courbure.

3. Dispositif de moulage (1) selon l'une quelconque des revendications 1 et 2, **caractérisé par le fait que** la face d'interface (50) et la face moulante (51) de l'au moins un moule de contre-dépouille (5) sont portées par un même élément rigide ou par plusieurs éléments rigides fixés d'un seul tenant les uns aux autres.

4. Dispositif de moulage (1) selon l'une quelconque des revendications 1 et 2, **caractérisé par le fait que** l'au moins un moule de contre-dépouille (5') est un moule gonflable comprenant une partie rigide présentant la face d'interface (50') et une partie souple présentant la face moulante (51'), la partie souple gonflable étant solidaire de la partie rigide et apte à être reliée à un moyen de gonflage par une ouverture (53) de gonflage et de dégonflage.

5. Dispositif de moulage (1) selon l'une quelconque des revendications 1 à 4, **caractérisé par le fait que** le dispositif de moulage (1) comprend plusieurs moules de contre-dépouille (5, 5'), lesquels forment alors des segments de moule (5a, 5b) aptes à être accolés les uns aux autres contre le moule de base (4) pour former un profil qui correspond à l'intérieur du compartiment (3) de logement d'accessoire à mouler, dont au moins un segment central (5a) et deux segments latéraux (5b), les segments de moule (5a, 5b) s'étendant notamment sur une longueur supérieure à la longueur de la paroi latérale (42) du moule de base (4) à laquelle ils sont solidarisés.

6. Dispositif de moulage (1) selon la revendication 4, **caractérisé par le fait que** la face d'interface (50') a une longueur égale à la longueur de la paroi latérale (42) du moule de base (4) à laquelle elle est solidarisée, la partie souple étant préformée pour que la face moulante (51') présente un profil de longueur supérieure à la longueur de la face d'interface (50') après gonflage.

7. Dispositif de moulage (1) selon l'une quelconque des revendications 1 à 6, **caractérisé par le fait que** les moyens de liaison amovible (6) entre le moule de base (4) et l'au moins un moule de contre-dépouille (5 ; 5') sont des moyens mécaniques, notamment des vis.

8. Procédé de fabrication d'une coque (2) pour bassin de piscine, **caractérisé par le fait que** le moulage de ladite coque (2) est réalisé à l'aide d'un dispositif de moulage (1) selon l'une des revendications 1 à 7, et comprenant les étapes suivantes :
- solidariser l'au moins un moule de contre-dépouille (5 ; 5') à l'une des parois latérales (42) du moule de base fixe (4), en une position prédéterminée ;
- mouler la coque (2), notamment par stratification de fibres et de résines, sur le moule de base (4) et l'au moins un moule de contre-dépouille (5 ; 5') ;
- après moulage de la coque (2), désolidariser l'au moins un moule de contre-dépouille (5 ; 5') du moule de base (4) et démouler du moule de base (4) la coque (2) et l'au moins un moule de contre-dépouille (5 ; 5') ; et
- retirer de la coque (2) moulée l'au moins un moule de contre-dépouille (5 ; 5').

9. Procédé de fabrication selon la revendication 8, le moulage de ladite coque (2) étant réalisé à l'aide d'un dispositif de moulage (1) selon la revendication 4, **caractérisé par le fait que** le procédé comprend en outre les étapes de gonflage de la partie souple du moule gonflable (5') avant l'étape de moulage, et de dégonflage de la partie souple (51') avant l'étape de démoulage de la coque (2).

10. Procédé de fabrication selon la revendication 8, le moulage de ladite coque (2) étant réalisé à l'aide d'un dispositif de moulage (1) selon la revendication 5, **caractérisé par le fait que** l'étape de retrait de l'au moins un moule de contre-dépouille (5 ; 5') de la coque (2) moulée comprend le retrait du segment central (5a), le déplacement de chaque segment latéral (5b) vers le centre du compartiment (3) formé dans la coque (2), puis son retrait.

11. Coque (2), notamment stratifiée, pour bassin de piscine monocoque, laquelle coque (2) comprend un fond (20) et des parois latérales (21), **caractérisée par le fait que** la coque (2) comprend en outre un compartiment (3) de logement d'accessoire, notamment de volet roulant, formé en contre-dépouille et d'un seul tenant avec l'une des parois latérales (21) de la coque (2) lors du moulage de ladite coque (2) à l'aide d'un dispositif de moulage (1) selon quelconque l'une des revendications 1 à 7.

## Patentansprüche

1. Vorrichtung zum Formen (1) einer Schale (2) für ein Poolbecken, wobei die Schale (2) Seitenwände (21) und einen Boden (20) aufweist und ein Fach (3) für die Unterbringung von Zubehör, insbesondere eines Rollladens, in einer seiner Seitenwände (21) integriert, wobei die Vorrichtung zum Formen (1) eine hohle Basisform (4) umfasst, aufweisend eine obere Fläche (40) und Seitenwände (41, 42, 43, 44), wobei die obere Oberfläche (40) bestimmt ist, den Boden (20) der zu formenden Schale (2) zu definieren, wobei die Vorrichtung zum Formen (1) **dadurch gekennzeichnet ist, dass** sie ferner mindestens eine seitliche Hinterschneidungsform (5; 5') umfasst, die eine Schnittstellenfläche (50; 50') aufweist, die zum Platzieren an einer der Seitenwände (42) der Basisform (4) in einem vorher festgelegten Abstand von der oberen Oberfläche (40) und von dem Ende der Seitenwand (42) der Basisform (4) imstande ist, und eine formende Fläche (51; 51') mit einem Profil, das dem Inneren des zu formenden Fachs (3) für die Unterbringung von Zubehör entspricht, wobei die mindestens eine Hinterschneidungsform (5; 5') zur zeitweiligen festen Verbindung mit der Basisform (4) durch Mittel zur lösbaren Verbindung (53; 6), mit der Schnittstellenfläche (50; 50') an der Seitenwand (42) der Basisform (40) platziert, imstande ist.

2. Vorrichtung zum Formen (1) nach Anspruch 1, **dadurch gekennzeichnet, dass** die formende Fläche (51; 51') der mindestens einen Hinterschneidungsform (5; 5') eine konvexe Form mit einem Krümmungsradius aufweist.

3. Vorrichtung zum Formen (1) nach einem der Ansprüche 1 und 2, **dadurch gekennzeichnet, dass** die Schnittstellenfläche (50) und die formende Fläche (51) der mindestens einen Hinterschneidungsform (5) von demselben starren Element oder von mehreren starren Elementen getragen werden, die einstückig aneinander befestigt sind.

4. Vorrichtung zum Formen (1) nach einem der Ansprüche 1 und 2, **dadurch gekennzeichnet, dass** die mindestens eine Hinterschneidungsform (5') eine aufblasbare Form ist, umfassend einen starren Teil, der die Schnittstellenfläche (50') aufweist, und einen elastischen Teil, der die formende Fläche (51') aufweist, wobei der aufblasbare elastische Teil mit dem starren Teil fest verbunden ist und zur Verbindung mit einem Aufblasmittel durch eine Aufblas- und Ablassöffnung (53) imstande ist.

5. Vorrichtung zum Formen (1) nach einem der Ansprüche 1 bis 4, **dadurch gekennzeichnet, dass** die Vorrichtung zum Formen (1) mehrere Hinterschneidungsformen (5, 5') umfasst, die dann Formsegmente (5a, 5b) bilden, die imstande sind, aneinander an der Basisform (4) aufgereiht zu sein, um ein Profil zu bilden, das dem Inneren des zu formenden Fachs (3) für die Unterbringung von Zubehör entspricht, darunter mindestens ein zentrales Segment (5a) und zwei seitliche Segmente (5b), wobei sich die Formsegmente (5a, 5b) insbesondere über eine Länge erstrecken, die größer als die Länge der Seitenwand (42) der Basisform (4) ist, mit der sie fest verbunden sind.

6. Vorrichtung zum Formen (1) nach Anspruch 4, **dadurch gekennzeichnet, dass** die Schnittstellenfläche (50') eine Länge hat, die gleich der Länge der Seitenwand (42) der Basisform (4) ist, mit der sie fest verbunden ist, wobei der elastische Teil vorgeformt ist, damit die formende Fläche (51') ein Profil mit einer Länge aufweist, die größer als die Länge der Schnittstellenfläche (50') nach dem Aufblasen ist.

7. Vorrichtung zum Formen (1) nach einem der Ansprüche 1 bis 6, **dadurch gekennzeichnet, dass** die Mittel zur lösbaren Verbindung (6) zwischen der Basisform (4) und der mindestens einen Hinterschneidungsform (5; 5') mechanische Mittel sind, insbesondere Schrauben.

8. Verfahren zur Herstellung einer Schale (2) für ein Poolbecken, **dadurch gekennzeichnet, dass** das Formen der Schale (2) mit Hilfe einer Vorrichtung zum Formen (1) nach einem der Ansprüche 1 bis 7 durchgeführt wird und die folgenden Schritte umfasst:
- festes Verbinden der mindestens einen Hinterschneidungsform (5; 5') mit einer der Seitenwände (42) der festen Basisform (4) in einer vorher festgelegten Position;
- Formen der Schale (2), insbesondere durch Laminieren von Fasern und Harzen, auf der Basisform (4) und der mindestens einen Hinterschneidungsform (5; 5');
- nach dem Formen der Schale (2) Lösen der mindestens einen Hinterschneidungsform (5; 5') von der Basisform (4) und Entformen der Schale (2) und der mindestens einen Hinterschneidungsform (5; 5') aus der Basisform (4); und
- Entfernen der mindestens einen Hinterschneidungsform (5; 5') von der geformten Schale (2).

9. Herstellungsverfahren nach Anspruch 8, wobei das Formen der Schale (2) mit Hilfe einer Vorrichtung zum Formen (1) nach Anspruch 4 durchgeführt wird, **dadurch gekennzeichnet, dass** das Verfahren ferner die Schritte des Aufblasens des elastischen Teils der aufblasbaren Form (5') vor dem Schritt des Formens und des Ablassens aus dem elastischen Teil (51') vor dem Schritt des Entformens der Schale (2) umfasst.

10. Herstellungsverfahren nach Anspruch 8, wobei das Formen der Schale (2) mit Hilfe einer Vorrichtung zum Formen (1) nach Anspruch 5 durchgeführt wird, **dadurch gekennzeichnet, dass** der Schritt des Entfernens der mindestens einen Hinterschneidungsform (5; 5') von der geformten Schale (2) das Entfernen des zentralen Segments (5a), das Verlagern jedes seitlichen Segments (5b) zum Zentrum des in der Schale (2) geformten Fachs (3), dann sein Entfernen, umfasst.

11. Schale (2), insbesondere laminiert, für ein einschaliges Poolbecken, wobei die Schale (2) einen Boden (20) und Seitenwände (21) umfasst, **dadurch gekennzeichnet, dass** die Schale (2) ferner ein Fach (3) für die Unterbringung von Zubehör, insbesondere eines Rollladens, umfasst, das beim Formen der Schale (2) mit Hilfe einer Vorrichtung zum Formen (1) nach einem der Ansprüche 1 bis 7 hinterschnitten und einstückig mit einer der Seitenwände (21) der Schale (2) geformt wird.

## Claims

1. A device (1) for moulding a shell (2) for a swimming pool, the shell (2) having side walls (21) and a bottom (20) and including an accessory accommodating compartment (3), such as for a roller shutter, inside one of its side walls (21), the moulding device (1) including a hollow base mould (4) having an upper surface (40) and side walls (41, 42, 43, 44), the upper surface (40) being intended to define the bottom (20) of the shell (2) to be moulded, the moulding device (1) being **characterised in that** it further includes at least one side undercut mould (5; 5') with an interface face (50; 50') adapted to be arranged against one of the side walls (42) of the base mould (4), at a predetermined distance from the upper surface (40) and the end of said side wall (42) of the base mould (4), and a moulding face (51; 51') having a profile in keeping with the interior of the accessory accommodating compartment (3) to be moulded, the at least one undercut mould (5; 5') being adapted to be temporarily secured to the base mould (4), using removable connecting means (53; 6), with the interface face (50; 50') being arranged against said side wall (42) of the base mould (40).

2. The moulding device (1) according to claim 1, **characterised in that** the moulding face (51; 51') of the at least one undercut mould (5; 5') has a convex shape with a radius of curvature.

3. The moulding device (1) according to any of claims 1 and 2, **characterised in that** the interface face (50) and the moulding face (51) of the at least one undercut mould (5) are carried by a single rigid member or by several rigid members integrally attached to one another.

4. The moulding device (1) according to any of claims 1 and 2, **characterised in that** the at least one undercut mould (5') is an inflatable mould including a rigid part having the interface face (50') and a flexible part having the moulding face (51'), the inflatable flexible part being secured to the rigid part and adapted to be connected to an inflating means through an inflating and deflating opening (53).

5. The moulding device (1) according to any of claims 1 to 4, **characterised in that** the moulding device (1) includes several undercut moulds (5, 5') which in turn constitute mould segments (5a, 5b) adapted to be placed side by side against the base mould (4) so as to form a profile that corresponds to the interior of the accessory accommodating compartment (3) to be moulded, including at least one central segment (5a) and two side segments (5b), wherein the mould segments (5a, 5b), for instance, extend over a length greater than the length of the side wall (42) of the base mould (4) to which they are secured.

6. The moulding device (1) according to claim 4, **characterised in that** the interface face (50') has a length equal to the length of the side wall (42) of the base mould (4) to which it is secured, the flexible part being preformed such that the moulding face (51') has a length profile greater than the length of the interface face (50') after inflation.

7. The moulding device (1) according to any of claims 1 to 6, **characterised in that** the removable connecting means (6) between the base mould (4) and the at least one undercut mould (5; 5') are mechanical means, such as screws.

8. A method for manufacturing a shell (2) for a swimming pool, **characterised in that** the moulding of said shell (2) is performed by using a moulding device (1) according to any of claims 1 to 7, and includes the following steps:
- securing the at least one undercut mould (5; 5') to one of the side walls (42) of the fixed base mould (4), at a predetermined position;
- moulding the shell (2), for instance by laminating fibers and resins, on the base mould (4) and the at least one undercut mould (5; 5');
- after moulding the shell (2), disengaging the at least one undercut mould (5; 5') from the base mould (4) and unmoulding, from the base mould (4), the shell (2) and the at least one undercut mould (5; 5'); and
- removing, from the moulded shell (2), the at least one undercut mould (5; 5').

9. The method according to claim 8, the moulding of said shell (2) being performed by using a moulding device (1) according to claim 4, **characterised in that** the method further includes the steps of inflating the flexible part of the inflatable mould (5') before the moulding step, and deflating the flexible part (51') before the step of unmoulding the shell (2).

10. The method according to claim 8, the moulding of said shell (2) being performed by using a moulding device (1) according to claim 5, **characterised in that** the step of removing the at least one undercut mould (5; 5') from the moulded shell (2) includes removing the central segment (5a), moving each side segment (5b) towards the center of the compartment (3) formed inside the shell (2), and then removing it.

11. A shell (2), for instance laminated, for a one-piece-shell swimming pool, said shell (2) having a bottom (20) and side walls (21), **characterised in that** the shell (2) further includes an accessory accommodating compartment (3), such as for a roller shutter, formed as an undercut and integral with one of the side walls (21) of the shell (2) when moulding said shell (2) using a moulding device (1) according to any of claims 1 to 7.
